## Europäisches Patentamt
## European Patent Office
## Office européen des brevets

(11) Publication number: **0 154 036**
**B1**

# (12) EUROPEAN PATENT SPECIFICATION

(45) Date of publication of patent specification: **11.04.90**

(51) Int. Cl.⁵: **F 02 D 11/10**

(21) Application number: **84116429.6**

(22) Date of filing: **28.12.84**

(54) Throttle valve controlling apparatus.

(30) Priority: **09.03.84 JP 43946/84**

(43) Date of publication of application:
**11.09.85 Bulletin 85/37**

(45) Publication of the grant of the patent:
**11.04.90 Bulletin 90/15**

(84) Designated Contracting States:
**DE GB**

(56) References cited:
**DE-A-3 039 521**
**DE-B-1 202 571**
**GB-A-2 071 426**
**GB-A-2 113 298**
**US-A-4 409 940**

**MOTORTECHNISCHE ZEITSCHRIFT, vol. 42, no. 12, December 1981, page 528, Schwäbisch-Gmünd, DE; "Elektronisches Gaspedal von Bosch"**

(73) Proprietor: **HITACHI, LTD.**
**6, Kanda Surugadai 4-chome Chiyoda-ku Tokyo (JP)**

(72) Inventor: **Ejiri, Yuuki**
**Sawaryo, 467 Tabiko**
**Katsuta-shi (JP)**
Inventor: **Ito, Tomoo**
**20-14, Higashioshima-3-chome**
**Katsuta-shi (JP)**
Inventor: **Kamifuji, Hiroshi**
**2785-28, Tsuda**
**Katsuta-shi (JP)**

(74) Representative: **Patentanwälte Beetz sen. - Beetz jun. Timpe - Siegfried - Schmitt-Fumian Steinsdorfstrasse 10 D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus for controlling an opening degree of a throttle valve which is fixed to a throttle valve shaft for swing movement around an axis of said throttle valve shaft so as to control an air-fuel mixture flow to be supplied to an engine (E), said apparatus comprising:

a motor including a rotor portion which is associated with said throttle valve shaft to swing said throttle valve;

means for detecting an amount of swing movement of said throttle valve and for producing a signal corresponding to the opening degree of said throttle valve;

a control unit for receiving and judging said signal from the detecting means and for outputting a command to said motor so as to swing said throttle valve in a desired opening degree; and

a one-piece throttle valve shaft on which said throttle valve and said rotor portion of said motor are disposed.

Concerning the control of a throttle valve it is already known that a throttle valve is controlled by a motor.

The US—PS 4,409,940 shows a flat motor in which a rotor is directly connected with a throttle valve shaft. However, there is not disclosed any idea to the effect that a whole motor constitutes a sole vibration system under the influence of the vibration.

In "Motortechnische Zeitschrift" 1981, page 12, there is disclosed a torsion-spring. It is not disclosed to mount an apparatus onto an induction cylinder in order to constitute a sole vibration-system.

In DE—B—1,202,571 there is disclosed the structure of a motor which is entirely different from the present invention. No torsion-spring is shown. Further, a sole vibration-system is not disclosed.

In DE—B—3,039,521 there is disclosed a control mechanism for a throttle valve, comprising a torsion spring for the reset of the throttle valve, which is disposed on one end portion of the valve shaft, and it is not taught there the construction of the motor according to the present invention. Furthermore, a sole vibration-system is not disclosed.

These known structures, however, necessitate a larger number of elements and a larger space. Accordingly, the number of manufacturing steps increases unfavourably, and the costs also augment. Furthermore, it is to be feared that the coupling means interposed between the motor and the throttle valve may not effect a torque transmission from the output shaft of the motor to the throttle valve shaft for sure, and/or may not allow the throttle valve and/or the output shaft to swing smoothly due to the difficulties in respect of precision of setting the throttle valve shaft and the output shaft of the motor.

Accordingly it is an object of the present invention to provide a throttle valve controlling apparatus which is free from the drawbacks and the risk described above, by providing means for restraining an undesirable rotation of the throttle valve shaft caused by the vibration of the motor car.

To this end, the present invention is characterized in that

a torsion spring is disposed in one end portion of said one-piece shaft opposite to the motor so as to urge said shaft to close said throttle valve,

said motor comprises a flat disc like shaped rotor portion comprising a winding, a pair of stators disposed at opposite sides of said flat rotor portion for providing a magnetic flux penetrating said flat rotor portion, each stator comprising a plurality of permanent magnets circumferentially equiangularly spaced, the magnets of the respective stators being axially aligned to each other, and a casing having a mounting base and a pan-shaped cover, one of said stators being mounted onto an inner side of said mounting base and the other being mounted onto an inner side of said pan-shaped cover, and in that

said detecting means is mounted to an outer side of said pan-shaped cover and is connected with an end portion of said throttle valve shaft projecting outwards through said pan-shaped cover.

The above and other objects and the features of the present invention will be apparent from the following description and the attached drawings.

Fig. 1 is a fragmentary sectional view of a portion of an engine to which one embodiment of the present invention is applied; and

Fig. 2 is a fragmentary sectional view of a portion of an engine to which another embodiment of the present invention is applied.

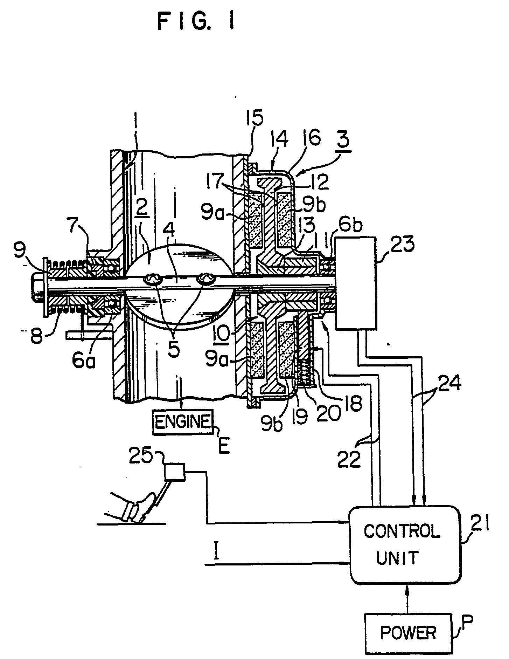

Referring to Fig. 1, a throttle valve controlling apparatus includes a throttle valve 2 provided in an induction cylinder 1 through which air-fuel mixture is supplied to an engine (E), and a motor 3 which is mounted on a portion of a peripheral wall surface of the induction cylinder 1. The throttle valve 2 is fixed to a one-piece throttle valve shaft 4 which extends diametrically through the induction cylinder 1. The throttle valve 2 is inserted into a diametrical through slit which is formed in the throttle valve shaft 4, and is located and fixed on the throttle valve shaft 4 by two screws (5). The throttle valve shaft 4 is carried at the opposite end portions thereof by ball bearings 6a, 6b, respectively.

A dust seal 7 is disposed adjacent the ball bearing 6a at one end portion of the shaft 4 and around the shaft 4 such as to prevent dust from entering into the negative pressure cylinder 1. Between the one end of the shaft 4 and the seal 7 a torsion coil-spring 8 is so disposed that one end thereof is secured to the induction cylinder wall and the other end thereof is secured to the valve shaft 4. The torsion coil-spring 8 is mounted to urge the throttle valve 2 in a fully closed condition due to its return torque. Accordingly, even when the motor 3 gets out of order during the operation of the engine, the throttle valve 2 is returned to the fully closed condition and then the running of the engine is stopped. The reference numeral 9 represents a collar for retaining the torsion coil-spring 8 in an appropriate state.

A rotor 10 of the motor 3 is closely mounted on the other end portion of the throttle valve shaft 4. The rotor 10 generally has a disk-like shape, and includes a commutator 11, a resinified armature winding 12 and a cylindrical base 13 carrying the resinified armature winding. The motor 3, further, includes a casing 14 which is composed of a mounting base 15 secured to the peripheral wall surface of the induction cylinder and a pan-shaped cover 16 fitted to the mounting base 15. Permanent magnets 9a, 9b are so secured to the mounting base 15 and the cover 16, respectively that the armature winding 12 is interposed between these magnets. The permanent magnets 9a, 9b are axially aligned to each other and are circumferentially equiangularly spaced. In this embodiment, the radial intermediate portions of the opposite end surfaces of the disk-like armature winding 12 are provided with annular recesses 17, 17 into which the permanent magnets 9a, 9b extend. Accordingly the axial distance between the magnets 9a, 9b decreases and the magnetic flux density in the magnetic field of the motor 3 increases. A brush cover 18 which contains a brush 19 is attached to the cover 16. The brush 19 is urged by a spring 20 in the brush cover 18 and is press fitted into the commutator 11. Another brush apparatus (not shown) of the same structure is also attached to the cover 16 at a position circumferentially spaced by 90 degrees in relation to the axis of the throttle valve shaft. Power (p) is supplied from the commutator 11 to the armature winding 12 through a control unit 21, lines 22 and the brushes 19.

At the other end of the throttle valve shaft 4 opposite to the dust seal 7, a detector 23 for detecting an opening degree of the throttle valve 2 is so disposed that the ball bearing 6b is interposed between the motor 3 and the detector 23. The detector 23 is fixed on the cover 16 of the motor casing 14. An amount of swing of the throttle valve shaft 4 is detected and a signal corresponding to the opening degree of the throttle valve 2 is fed to the control unit 21 by the detector 23 through lines 24. The detector 23 includes an encoder or a potentiometer.

The control unit 21 receives signals from the detector 23 and another signals from a device for transmitting commands from an operator, such as an accelerator 25, and information (I) such as the number of revolutions of the engine shaft, the position of the change gear, or the pressure in the induction cylinder 1.

The operation of this embodiment will be explained as follows.

The control unit 21 determines the desired opening degree of the throttle valve in accordance with the signals from the accelerator 25 and with the information representing the engine conditions, and supplies power (P) to the rotor 10 of the motor 3 such as to match the opening degree of the throttle valve 2 with the desired opening degree. The control of the opening degree of the throttle valve 2 is conducted by balancing the return torque of the torsion coil-spring 8 with the driving torque of the rotor 10, i.e., the driving torque of the throttle valve shaft 4. When it is required to more widely open the throttle valve, more current is supplied to the rotor 10 such as to open the throttle valve against the return torque of the torsion coil-spring 8. At this time, the signals from the detector 23 are fed back to the control unit 21, whereby the amount of the current to be supplied to the rotor is controlled. To the contrary, it is required to close the throttle valve, less current is supplied to the rotor 10 so that the return torque of the torsion coil-spring 8 overcomes the driving torque of the rotor 10 and closes the throttle valve. When the torsion coil-spring 8 gets out of order, the throttle valve can not be closed. However, in this case, the control unit 21 may detect any defect in the torsion coil-spring 8 by the fed back signals from the detector 23. The control unit 21 informs the operator of the trouble and at the same time controls the throttle valve by supplying a reversed current. If the motor gets out of order, it is impossible to control the throttle valve, but the return torque of the torsion coil-spring 8 can close the throttle valve as described above. Therefore, irregular operation of the engine is prevented even when either the torsion coil-spring 8 or the motor 3 becomes out of order.

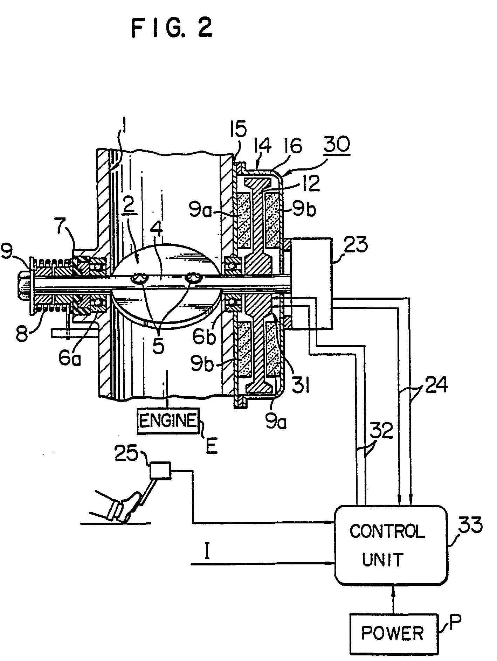

Referring next to Fig. 2, another embodiment will be described.

The elements shown in Fig. 2 as same or like as the elements in Fig. 1 are denoted by the same reference numerals as Fig. 1. A motor 30 has a rotor 31 without a commutator and permanent magnets 9a, 9b. Both ball bearings 6a, 6b are attached to the cylinder wall. The rotor 31 is disposed on a shaft portion between the ball bearing 6b and the detector 23 which is mounted on an end of a one piece throttle valve shaft 4. The rotor 31 generally has a disk-like shape and includes the armature winding 12. The armature winding 12 and the throttle valve shaft 4 are integrally impregnated with resins. The lead wires 32 of the winding 12 are directly connected to a control unit 33.

In the embodiment shown in Fig. 1, the direction of the current which flows through the rotor is controlled by the commutator 11 and brushes 19, but in the other embodiment in Fig. 2, the current to be supplied to the rotor is controlled by the control unit 33 on the basis of the signals representing an error between a value of the desired opening degree of the throttle valve and the output from the detector.

In the embodiment shown in Fig. 2, the apparatus can be made smaller than the one in Fig. 1, and the noise and wear caused by a contact between the commutator and the brushes of the embodiment shown in Fig. 1 can be eliminated, whereby its life is lengthened.

According to the present invention, since the throttle valve and the rotor of the motor are mounted on the one-piece shaft, a swing movement of the throttle valve is made smoothly and effectively. In addition, the number of elements decreases due to a lack of the coupling means, so that a lower inertia and a rapid response are obtained.

**Claims**

1. An apparatus for controlling an opening degree of a throttle valve (2) which is fixed to a throttle valve shaft for swing movement around an axis of said throttle valve shaft so as to control an air-fuel mixture flow to be supplied to an engine (E), said apparatus comprising:

a motor (3, 30) including a rotor portion (10, 31) which is associated with said throttle valve shaft to swing said throttle valve;

means (23) for detecting an amount of swing movement of said throttle valve and for producing a signal corresponding to the opening degree of said throttle valve;

a control unit (21, 33) for receiving and judging said signal from the detecting means and for outputting a command to said motor so as to swing said throttle valve in a desired opening degree; and

a one-piece throttle valve shaft (4) on which said throttle valve (2) and said rotor portion (10) of said motor (3) are disposed, characterised in that

a torsion spring (8) is disposed in one end portion of said one-piece shaft (4) opposite to the motor (3) so as to urge said shaft (4) to close said throttle valve (2),

said motor (3) comprises a flat disc like shaped rotor portion (10) comprising a winding (12), a pair of stators (9a, 9b) disposed at opposite sides of said flat rotor portion (10) for providing a magnetic flux penetrating said flat rotor portion (10), each stator comprising a plurality of permanent magnets circumferentially equiangularly spaced, the magnets of the respective stators being axially aligned to each other, and a casing (14) having a mounting base (15) and a pan-shaped cover (16), one of said stators (9a, 9b) being mounted onto an inner side of said mounting base (15) and the other being mounted onto an inner side of said pan-shaped cover (16), and in that

said detecting means (23) is mounted to an outer side of said pan-shaped cover (16) and is connected with an end portion of said throttle valve shaft (4) projecting outwards through said pan-shaped cover (16).

2. The apparatus as claimed in claim 1, characterized in that said rotor portion (10) on said one-piece shaft (4) are moulded together.

**Patentansprüche**

1. Vorrichtung zur Steuerung eines Öffnungsgrades einer Drosselklappe (2), die auf einer Drosselklappenwelle zur Schwenkbewegung um eine Achse der Drosselklappenwelle befestigt ist, um einen Kraftstoff-Luft-Gemischstrom zu steuern, welcher einem Motor (E) zugeführt wird, wobei die Vorrichtung enthält:

einen Motor (3, 30) mit einem Läuferteil (10, 31), welcher der Drosselklappenwelle zum Schwenken der Drosselklappe zugeordnet ist;

eine Einrichtung (23) zur Erfassung eines Betrages der Schwenkbewegung der Drosselklappe und zur Erzeugung eines Signals entsprechend dem Öffnungsgrad der Drosselklappe;

eine Steuereinheit (21, 33) zur Aufnahme und Bewertung des Signals aus der Erfassungseinrichtung und zur Ausgabe eines Steuerbefehls an den Motor, um die Drosselklappe in einen gewünschten Öffnungsgrad zu schwenken; und

eine einstückige Drosselklappenwelle (4), auf der die Drosselklappe (2) und der Läuferteil (10) des Motors (3) angeordnet sind,
dadurch gekennzeichnet,

daß eine Drehfeder (8) auf einem Endteil der einstückigen Welle (4) gegenüber dem Motor (3) angeordnet ist, um die Welle (4) zum Schließen der Drosselklappe (2) anzutreiben,

daß der Motor (3) einen flachen scheibenförmigen Läuferteil (10) mit einer Wicklung (12), ein Paar auf gegenüberliegenden Seiten des flachen Läuferteils (10) angeordnete Ständer (9a, 9b) zur Erzeugung eines den flachen Läuferteil (10) durchdringenden magnetischen Flusses, wobei jeder Ständer mehrere in Umfangsrichtung gleichwinklig beabstandete Permanentmagnete enthält und wobei die Magnete der jeweiligen Ständer axial zueinander ausgerichtet sind, sowie ferner ein Gehäuse (14) aufweist, mit einer Befestigungsplatte (15) und einem pfannenförmigen Deckel (16), wobei einer der Ständer (9a, 9b) an einer Innenseite der Befestigungsplatte (15) und der andere an der Innenseite des pfannenförmigen Deckel (16) angebracht ist, und

daß die Erfassungseinrichtung (23) an einer Außenseite des pfannenförmigen Deckels (16) angebracht und mit einem Endteil der Drosselklappenwelle (4) verbunden ist, die durch den pfannenförmigen Deckel nach außen vorsteht.

2. Vorrichtung nach Anspruch 1, dadurch gekennzeichnet, daß der Laüferteil (10) und die einstückige Welle (4) miteinander vergossen sind.

**Revendications**

1. Dispositif pour commander le degré d'ouverture d'un papillon des gaz (2), qui est fixé à un arbre du papillon des gaz de manière à pouvoir pivoter autour d'un axe de cet arbre de manière à commander le débit du mélange air-carburant devant être envoyé à un moteur (E), ledit dispositif comprenant:

un moteur (3, 30) incluant une partie formant rotor (10, 31), qui est associée audit arbre du papillon des gaz de manière à faire pivoter ce dernier;

des moyens (23) servant à détecter une amplitude du mouvement de pivotement dudit papillon des gaz et à produire un signal correspondant au degré d'ouverture dudit papillon des gaz;

une unité de commande (21, 33) servant à recevoir et évaluer ledit signal délivré par les moyens de détection et à envoyer un ordre audit moteur pour faire pivoter ledit papillon des gaz en fonction du degré d'ouverture désiré; et

un arbre monobloc (4) du papillon des gaz, sur lequel sont montés ledit papillon des gaz (2) et ladite partie formant rotor (10) dudit moteur (3), caractérisé en ce que

un ressort de torsion (8) est disposé dans une partie d'extrémité dudit arbre monobloc (4) à l'opposé du moteur (3) de manière à repousser ledit arbre (4) dans le sens de la fermeture dudit papillon des gaz (2),

ledit moteur (3) comporte une partie formant rotor (10) en forme de disque plat, comprenant un enroulement (12), un couple de stators (9a, 9b) disposés sur des côtés opposés de ladite partie plate formant rotor (10) de manière à produire un flux magnétique pénétrant dans ladite partie plate formant rotor (10), chaque stator comprenant une pluralité d'aimants permanents équidistants angulairement sur la circonférence, les aimants des stators respectifs étant alignés axialement les uns sur les autres, et un carter (14) comportant une base de support (15) et un capot (16) en forme de cuvette, l'un desdits stators (9a, 9b) étant monté sur une face intérieure de ladite base de montage (15) et l'autre étant montée sur une face intérieure dudit capot en forme de cuvette (16), et en ce que

lesdits moyens de détection (23) sont montés sur une face extérieure dudit capot en forme de cuvette (16) et sont raccordés à une partie d'extrémité dudit arbre (14) du papillon des gaz, qui fait saillie extérieurement à travers ledit capot en forme de cuvette (16).

2. Dispositif selon la revendication 1, caractérisé en ce que ladite partie formant rotor (10) et ledit arbre monobloc (4) sont moulés d'un seul tenant.

EP 0 154 036 B1

FIG. 1

ENGINE
E

CONTROL
UNIT

POWER

1

# FIG. 2